# EUROPEAN PATENT APPLICATION

(11) **EP 4 033 811 A1**
(43) Date of publication of application: **27.07.2022**
(21) Application number: 20866821.0
(22) Date of filing: 17.09.2020
(51) Int. Cl.: H04W 36/00, H04W 36/18

(54) **DATA TRANSMISSION METHOD, TERMINAL AND NETWORK NODE**

(30) Priority: 17.09.2019 CN 201910878236
(71) Applicant: Vivo Mobile Communication Co., Ltd., Dongguan, Guangdong 523863 (CN)
(72) Inventor: ZHANG, Yanxia, Dongguan, Guangdong 523863 (CN); WU, Yumin, Dongguan, Guangdong 523863 (CN)
(74) Representative: Carangelo, Pierluigi
(86) International application number: PCT/CN2020/115972
(87) International publication number: WO 2021/052435

(57) **Abstract**

Provided are a data transmission method, a terminal and a network node. The data transmission method comprises: When an uplink transmission path of a terminal during a dual connectivity mobility management process changes, executing a first operation, wherein executing the first operation comprises either of continuing data transmission of a source connection and stopping the data transmission of the source connection.

## Description

### CROSS-REFERENCE TO RELATED APPLICATIONS

This application claims priority to Chinese Patent Application No. 201910878236.8 filed in China on September 17, 2019, which is incorporated herein by reference in its entirety.

### TECHNICAL FIELD

The present disclosure relates to the field of communications technologies, and in particular, to a data transmission method, a terminal, and a network node.

### BACKGROUND

In a related technology, a terminal may maintain a data connection in both a source cell and a target cell in a moving process. However, at a same moment, the terminal can send data on only one uplink transmission path. In a case that an uplink transmission path of the terminal changes, how to process data transmission corresponding to a source connection is a problem that currently needs to be resolved.

### SUMMARY

Embodiments of the present disclosure provide a data transmission method, a terminal, and a network node, to resolve a problem of how to process data transmission corresponding to a source connection in a case that an uplink transmission path of the terminal changes.

To resolve the foregoing technical problem, the embodiments of the present disclosure are implemented as follows.

According to a first aspect, an embodiment of the present disclosure provides a data transmission method, applied to a terminal and including:
performing a first operation in a case that an uplink transmission path of the terminal is changed in a dual-connection mobility management process; where
the performing a first operation includes either of continuing data transmission of a source connection and stopping the data transmission of the source connection.

According to a second aspect, an embodiment of the present disclosure provides a data transmission method, applied to a target network node and including:
sending a sequence number status transfer request message to a source network node; and
receiving information related to received data sent by the source network node.

According to a third aspect, an embodiment of the present disclosure provides a data transmission method, applied to a source network node and including:
receiving a sequence number status transfer request message from a target network node; and
sending information related to received data to the target network node.

According to a fourth aspect, an embodiment of the present disclosure provides a terminal, including:
an execution module, configured to perform a first operation in a case that an uplink transmission path of the terminal is changed in a dual-connection mobility management process; where
the performing a first operation includes either of continuing data transmission of a source connection and stopping the data transmission of the source connection.

According to a fifth aspect, an embodiment of the present disclosure provides a network node, where the network node is a target network node and includes:
a first sending module, configured to send a sequence number status transfer request message to a source network node; and
a first receiving module, configured to receive information related to received data sent by the source network node.

According to a sixth aspect, an embodiment of the present disclosure provides a network node, where the network node is a source network node and includes:
a second receiving module, configured to receive a sequence number status transfer request message from a target network node; and
a fourth sending module, configured to send information related to received data to the target network node.

According to a seventh aspect, an embodiment of the present invention provides a communication device, including a memory, a processor, and a computer program that is stored in the memory and executable on the processor, and when the computer program is executed by the processor, steps of the foregoing data transmission method can be implemented.

According to an eighth aspect, an embodiment of the present disclosure provides a computer-readable storage medium, where a computer program is stored on the computer-readable storage medium, and when the computer program is executed by a processor, steps of the foregoing data transmission method can be implemented.

In the embodiments of the present disclosure, in a case that an uplink transmission path of a terminal is changed in a dual-connection mobility management process, the terminal may continue data transmission of a source connection or stop data transmission of a source connection, to resolve a problem of how to process data transmission corresponding to the source connection.

### BRIEF DESCRIPTION OF DRAWINGS

To describe the technical solutions of the embodiments of the present disclosure more clearly, the following briefly describes the accompanying drawings required for describing the embodiments of the present disclosure. Apparently, the accompanying drawings in the following description show merely some embodiments of the present disclosure, and a person of ordinary skill in the art may still derive other accompanying drawings from these accompanying drawings without creative efforts.
FIG. 1 is a flowchart of a data transmission method according to an embodiment of the present disclosure;
FIG. 2 is a flowchart of another data transmission method according to an embodiment of the present disclosure;
FIG. 3 is a flowchart of another data transmission method according to an embodiment of the present disclosure;
FIG. 4 is a first schematic diagram of a structure of a terminal according to an embodiment of the present disclosure;
FIG. 5 is a first schematic diagram of a structure of a network node according to an embodiment of the present disclosure;
FIG. 6 is a second schematic diagram of a structure of a network node according to an embodiment of the present disclosure;
FIG. 7 is a second schematic diagram of a structure of a terminal according to an embodiment of the present disclosure; and
FIG. 8 is a third schematic diagram of a structure of a network node according to an embodiment of the present disclosure.

### DESCRIPTION OF EMBODIMENTS

To describe the technical solutions of the embodiments of the present disclosure more clearly, the following briefly describes the accompanying drawings required for describing the embodiments of the present disclosure. Apparently, the accompanying drawings in the following description show merely some embodiments of the present disclosure, and a person of ordinary skill in the art may still derive other accompanying drawings from these accompanying drawings without creative efforts.

To facilitate understanding of the embodiments of the present disclosure, the following content is first described.

For dual connectivity (DC), a terminal such as user equipment (UE) may establish connections in two cell groups at the same time, for example, may establish connections in a master cell group (MCG) and a secondary cell group (SCG) at the same time. The MCG may include a primary cell (Pcell) and a secondary cell (SCell), and the SCG may include a primary secondary cell (PSCell) and an SCell. Both the PCell and the PSCell may be referred to as a special cell (SpCell).

In a dual-connection mobility process (for example, handover or SCG change), the UE may establish connections between a source cell and a target cell at the same time, and then release the connection of the source cell, and only keep the connection of the target cell. Due to a limitation of a capability of the UE and/or a limitation of network deployment complexity, the UE may send data (that is, uplink data) on only one uplink transmission path at a same moment. Therefore, the UE needs to be controlled to quickly change a sending path of the uplink data from a source connection to a target connection in a mobility process.

In this embodiment of the present disclosure, a connection between the UE and the source cell (that is, a connection between the UE and a network node of the source cell) is referred to as a source connection, and a network node corresponding to the source connection is referred to as a source network node. A connection between the UE and the target cell (that is, a connection between the UE and a network node of the target cell) is referred to as a target connection, and a network node corresponding to the target connection is referred to as a target network node.

To resolve a problem of how to process data transmission corresponding to a source connection, an embodiment of the present disclosure provides a data transmission method. In a case that an uplink transmission path of a terminal is changed in a dual-connection mobility management process, data transmission of a source connection is continued, or data transmission of a source connection is stopped.

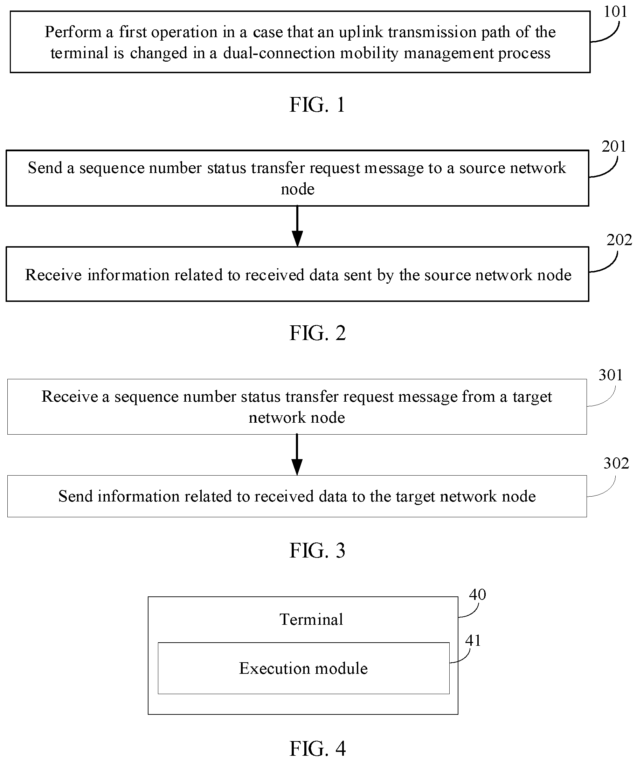

FIG. 1 is a flowchart of a data transmission method according to an embodiment of the present disclosure. The method is applied to a terminal. As shown in FIG. 1, the method includes the following steps.

Step 101: Perform a first operation in a case that an uplink transmission path of the terminal is changed in a dual-connection mobility management process.

Optionally, the performing a first operation includes either of continuing data transmission of a source connection and stopping the data transmission of the source connection.

It should be noted that, that the uplink transmission path changes may be understood as that an uplink data sending path changes, or the uplink transmission path is converted. In an implementation, the terminal may determine, based on a target event, that the uplink transmission path changes, that is, the uplink transmission path changes from the source connection to a target connection. The target event may be any one of following: random access of a target network node succeeds, handover of the target network node succeeds, and a network indicates that the uplink transmission path has been changed.

Before performing step 101, the terminal may receive configuration information of dual-connection mobility management from a network device, so that the terminal triggers a dual-connection mobility management process such as dual-connection handover or dual-connection SCG changing based on the configuration information.

In this embodiment of the present disclosure, when the uplink transmission path of the terminal in the dual-connection mobility management process changes, the terminal may continue the data transmission of the source connection or stop the data transmission of the source connection, to resolve a problem of how to process the data transmission corresponding to the source connection.

Optionally, for uplink data transmission, the foregoing continuing the data transmission of the source connection may include at least one of following:
stopping transferring a packet data convergence protocol (PDCP) data protocol data unit (PDU) to a first radio link control (RLC) entity by using a PDCP entity of the terminal;
transferring a PDCP control PDU to the first RLC entity by using the PDCP entity of the terminal, that is, transferring the PDCP control PDU to the first RLC entity by using the PDCP entity of the terminal, where the PDCP control PDU may be a data packet including compressed feedback corresponding to downlink data of the source connection;
starting to transfer the PDCP data PDU to a second RLC entity by using the PDCP entity of the terminal;
continuing to transmit uplink data by using the first RLC entity, where the uplink data may include at least one of following: data in a transmission buffer of the first RLC entity, data in a retransmission buffer of the first RLC entity, or control data (RLC control PDU) of the first RLC entity; and
continuing to transmit uplink data by using a hybrid automatic repeat request (HARQ) entity (or HARQ process) corresponding to a source connection cell, where the uplink data may include at least one of following: uplink HARQ newly-transmitted data or uplink HARQ retransmission data.

Optionally, for uplink data transmission, the foregoing stopping the data transmission of the source connection may include at least one of following:
stopping transferring a PDCP data PDU to a first RLC entity by using a PDCP entity of the terminal;
stopping transferring a PDCP control PDU to the first RLC entity by using the PDCP entity of the terminal;
starting to transfer the PDCP data PDU to a second RLC entity by using the PDCP entity of the terminal;
emptying data in a transmission buffer of the first RLC entity;
emptying data in a retransmission buffer of the first RLC entity;
emptying data in an HARQ buffer corresponding to the source connection; and
discarding an uplink grant of a source connection cell; for example, if there is a dynamically scheduled or configured uplink grant on a PCell corresponding to the source connection of the terminal, the terminal discards an uplink sending resource allocated by the uplink grant.

The first RLC entity is an RLC entity corresponding to the source connection of the terminal, and the second RLC entity is an RLC entity corresponding to a target connection of the terminal. The PDCP entity may be understood as a sending PDCP entity of the corresponding terminal.

In this embodiment of the present disclosure, to ensure integrity of data transmission, the terminal may retransmit data to a target network node in a dual-connection mobility management process. The data may be optionally a PDCP SDU, and a retransmission occasion of the data may be either of following:
the uplink transmission path has been changed; for example, the uplink transmission path of the terminal changes from the source connection to the target connection; and
the source connection has been released; for example, the terminal may release the source connection based on at least one of following: receiving a specific message, receiving indication information indicating that the source connection has been released, and a specific event.

In an implementation, if the terminal continues the data transmission of the source connection when the uplink transmission path of the terminal in the dual-connection mobility management process changes, an occasion at which the terminal retransmits data to the target network node may be: The source connection has been released.

In another implementation, if the terminal stops the data transmission of the source connection when the uplink transmission path of the terminal in the dual-connection mobility management process changes, an occasion at which the terminal retransmits data to the target network node may be: The uplink transmission path has been changed, or the source connection has been released.

Optionally, a process in which the terminal retransmits data (for example, the PDCP SDU) to the target network node may be as follows:
the terminal retransmits data to the target network node by a sending PDCP entity (that is, a PDCP entity of the terminal) according to a preset rule; for example, the terminal may retransmit data in ascending order of sequence numbers (for example, a COUNT value associated with a retransmitted PDCP SDU before retransmission); and/or
the terminal retransmits a PDCP entity (that is, a PDCP entity of the terminal) to the target network node based on a received status report delivered by the target network node; for example, the status report may be a status report used to indicate whether a PDCP data packet is successfully sent.

Optionally, the retransmitted data may include either of following:

### (1) Data from a beginning of first data to an end of second data.

The first data is the first data that is not acknowledged to be successfully received (for example, is not acknowledged to be successfully received by the source network node). The second data is the last data transferred to the first RLC entity. The first RLC entity is an RLC entity corresponding to the source connection of the terminal.

In an implementation, the first data may be data corresponding to the first PDCP data PDU that is not acknowledged to be successfully received by the source network node. The second data may be data corresponding to the last PDCP data PDU transmitted to the first RLC entity. In other words, the data in (1) may be corresponding to a PDCP SDU that is sent to the first RLC entity by using the sending PDCP entity and that is corresponding to data from the first PDCP data PDU that is not acknowledged to be successfully received by the source network node to the last PDCP data PDU transferred to the first RLC entity.

In an implementation, when retransmitting the data in (1), the terminal may retransmit the data in ascending order of sequence numbers of the data (for example, a COUNT value associated with a retransmitted PDCP SDU before retransmission).

For example, PDCP data PDUs transferred to an RLC entity of a source connection by a sending PDCP entity of UE 1 are 1, 2, 3, 4, and 5, that is, sequence numbers of the PDCP data PDUs are 1, 2, 3, 4, and 5. If the PDCP data PDUs 2 and 3 are not acknowledged to be successfully received by the source network node when the source connection has been released, the sending PDCP entity of the UE 1 may retransmit PDCP SDUs corresponding to the PDCP data PDUs 2, 3, 4, and 5 to the target network node in a sequence of sequence numbers.

### (2) Third data.

The third data is data that is not acknowledged to be successfully received (for example, is not acknowledged to be successfully received by the source network node). In an implementation, the third data may be data corresponding to a PDCP data PDU that is not acknowledged to be successfully received by the source network node. That is, the data in (2) is a PDCP SDU corresponding to a PDCP data PDU that is sent to the first RLC entity by using the PDCP entity of the terminal and that is not acknowledged to be successfully received by the source network node.

In an implementation, when retransmitting the data in (2), the terminal may retransmit the data in ascending order of sequence numbers of the data (for example, a COUNT value associated with a retransmitted PDCP SDU before retransmission).

In another implementation, when retransmitting the data in (2), the terminal may retransmit the data based on a received status report delivered by the target network node (that is, a status report used to indicate whether a PDCP data packet is successfully sent).

For example, PDCP data PDUs delivered by a sending PDCP entity of UE 2 to the RLC entity of the source connection are 1, 2, 3, 4, and 5. If the source connection has been released, the UE 2 learns, based on the PDCP status report delivered by the target network node, that the PDCP data PDUs 2 and 3 are not successfully received by a network side, the UE 2 may retransmit PDCP SDUs corresponding to the PDCP data PDUs 2 and 3 to the target network node by using the sending PDCP entity.

In this embodiment of the present disclosure, in a dual-connection mobility process, to ensure integrity of data transmission, the target network node (that is, a network node corresponding to the target connection) may initiate a sequence number status transfer (SN status transfer) request to a source network node (that is, a network node corresponding to the source connection), to retransmit data.

FIG. 2 is a flowchart of a data transmission method according to an embodiment of the present disclosure. The method is applied to a target network node. As shown in FIG. 2, the method includes the following steps.

Step 201: Send a sequence number status transfer request message to a source network node.

Optionally, an occasion at which the target network node initiates the sequence number status transfer request to the source network node may be as follows: The target network node determines that a terminal releases the source connection; or the target network node determines that the terminal has changed an uplink transmission path.

For example, the target network node may determine, based on at least one of following, that the terminal releases the source connection: a specific message is received, indication information indicating that the source connection of the terminal has been released, and a specific event.

Step 202: Receive information related to received data sent by the source network node.

The information related to the received data may include at least one of following:
receiving status indication information of uplink data corresponding to a target bearer; for example, receiving status indication information of an uplink PDCP SN and/or a hyper frame number (HFN);
sending status indication information of downlink data corresponding to the target bearer; for example, sending status indication information of a downlink PDCP SN and/or a downlink HFN; and
uplink data received by the source network node; for example, a PDCP SDU.

It may be understood that the receiving status indication information of the uplink data and/or the sending status indication information of the downlink data may be sent to the source network node by using a sequence number status transfer response message.

Optionally, after receiving the receiving status indication information of the uplink data sent by the source network node is received, the target network node may further send the receiving status indication information of the uplink data to the terminal, so that the terminal learns a data receiving status of the source network node. For example, the receiving status indication information of the uplink data may indicate that data whose PDCP sequence numbers (for example, COUNT values) are 1 and 2 is received, and data whose PDCP sequence number (for example, a COUNT value) is 3 is not received.

Optionally, after the uplink data sent by the source network node is received, the target network node may further discard duplicate data in a case that the duplicate data exists between the uplink data sent by the source network node and first uplink data, and send the received uplink data to a core network node in a sequence of sequence numbers. The first uplink data is uplink data sent by the terminal and received by the target network node.

For example, if the uplink data that is forwarded by the source network node and received by the target network node is data packets whose PDCP sequence numbers (for example, COUNT values) are 4, 6, 7, and 8, and the received uplink data sent by the terminal is data packets whose PDCP sequence numbers are 3, 4, 5, 6, 7, and 8, that is, data packets whose PDCP sequence numbers are 4, 6, 7, and 8 are repeatedly received, the target network node may discard the duplicate data, that is, data packets whose PDCP sequence numbers are 4, 6, 7, and 8, and deliver corresponding data packets to the core network node in sequence, that is, PDCP sequence numbers 3, 4, 5, 6, 7, and 8.

In this embodiment of the present disclosure, the target network node initiates the sequence number status transfer request, so that the target network node can learn a data receiving status, thereby ensuring integrity of data transmission.

FIG. 3 is a flowchart of a data transmission method according to an embodiment of the present disclosure. The method is applied to a source network node. As shown in FIG. 3, the method includes the following steps.

Step 301: Receive a sequence number status transfer request message from a target network node.

Optionally, an occasion at which the target network node initiates the sequence number status transfer request to the source network node may be: The target network node determines that a terminal releases a source connection.

Step 302: Send information related to received data to the target network node.

The information related to the received data may include at least one of following:
receiving status indication information of uplink data corresponding to a target bearer; for example, receiving status indication information of an uplink PDCP SN and/or an uplink HFN;
sending status indication information of downlink data corresponding to the target bearer; for example, sending status indication information of a downlink PDCP SN and/or a downlink HFN;
uplink data received by the source network node; for example, a PDCP SDU.

Optionally, the received uplink data forwarded by the source network node to the target network node may be uplink data received by the source network node starting from second uplink data, where the second uplink data is uplink data corresponding to a first discontinuous sequence number received by the source network node.

For example, if PDCP PDU sequence numbers (for example, COUNT values) of the uplink data received by the source network node are 1, 2, 4, 6, 7, and 8, and the PDCP PDU sequence numbers 1 and 2 are consecutive sequence numbers, the source network node may send data packets of the PDCP PDU sequence numbers 4, 6, 7, and 8 to the target network node from a data packet of the PDCP PDU sequence number 4.

Further, to ensure that a core network node receives complete data, before uplink data received by the source network node is sent to the target network node, that is, the uplink data received by the source network node from second uplink data, the source network node may further send, to the core network node, uplink data corresponding to consecutive sequence numbers before the second uplink data. The core network node may be a serving gateway S-GW or a user plane function (UPF).

For example, if PDCP PDU sequence numbers (for example, COUNT values) of the uplink data received by the source network node are 1, 2, 4, 6, 7, and 8, and the PDCP PDU sequence numbers 1 and 2 are consecutive sequence numbers, the source network node may first send data packets of the PDCP PDU sequence numbers 1 and 2 to the core network node (for example, an S-GW or a UPF), and then send data packets of the PDCP PDU sequence numbers 4, 6, 7, and 8 to the target network node from a data packet of the PDCP PDU sequence number 4.

The data transmission method in the present disclosure is described above, and a terminal and a network node in the present disclosure are described below with reference to embodiments and the accompanying drawings.

FIG. 4 is a schematic diagram of a structure of a terminal according to an embodiment of the present disclosure. As shown in FIG. 4, a terminal 40 includes:
an execution module 41, configured to perform a first operation in a case that an uplink transmission path of the terminal 40 is changed in a dual-connection mobility management process; where
the performing a first operation includes either of continuing data transmission of a source connection and stopping the data transmission of the source connection.

In this embodiment of the present disclosure, when the uplink transmission path of the terminal 40 in the dual-connection mobility management process changes, the terminal may continue the data transmission of the source connection or stop the data transmission of the source connection, to resolve a problem of how to process the data transmission corresponding to the source connection.

Optionally, when continuing the data transmission of the source connection, the execution module 41 may perform at least one of following:
stopping transferring a PDCP data PDU to a first RLC entity by using a PDCP entity of the terminal;
transferring a PDCP control PDU to the first RLC entity by using the PDCP entity of the terminal;
starting to transfer the PDCP data PDU to a second RLC entity by using the PDCP entity of the terminal;
continuing to transmit uplink data by using the first RLC entity; and
continuing to transmit uplink data by using an HARQ entity corresponding to a source connection cell.

Optionally, when stopping the data transmission of the source connection, the execution module 41 may perform at least one of following:
stopping transferring a PDCP data PDU to a first RLC entity by using a PDCP entity of the terminal;
stopping transferring a PDCP control PDU to the first RLC entity by using the PDCP entity of the terminal;
starting to transfer the PDCP data PDU to a second RLC entity by using the PDCP entity of the terminal;
emptying data in a transmission buffer of the first RLC entity;
emptying data in a retransmission buffer of the first RLC entity;
emptying data in an HARQ buffer corresponding to the source connection; and
discarding an uplink grant of a source connection cell; where
the first RLC entity is an RLC entity corresponding to a source connection of the terminal, and the second RLC entity is an RLC entity corresponding to a target connection of the terminal.

Optionally, the terminal 40 may further include:
a transmission module, configured to retransmit data to a target network node by using the PDCP entity of the terminal according to a preset rule; and/or
retransmit data to a target network node by using the PDCP entity of the terminal based on a received status report delivered by the target network node.

Optionally, the retransmitted data includes either of following:
data from a beginning of first data to an end of second data; and
third data; where
the first data is the first data that is not acknowledged to be successfully received, the second data is the last data that is transmitted to the first RLC entity, the third data is data that is not acknowledged to be successfully received, and the first RLC entity is an RLC entity corresponding to the source connection of the terminal.

Optionally, a retransmission occasion of the data is either of following:
the uplink transmission path has been changed; and
the source connection has been released.

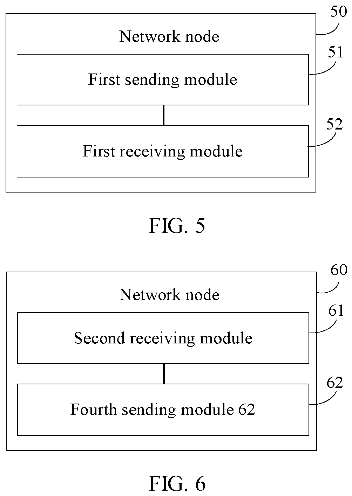

FIG. 5 is a schematic diagram of a structure of a network node according to an embodiment of the present disclosure. The network node is a target network node. As shown in FIG. 5, a network node 50 includes:
a first sending module 51, configured to send a sequence number status transfer request message to a source network node; and
a first receiving module 52, configured to receive information related to received data sent by the source network node.

Optionally, a sending occasion of the sequence number status transfer request message is:
the target network node determines that the terminal releases the source connection; or
the target network node determines that the terminal has changed the uplink transmission path.

Optionally, the information related to the received data may include at least one of following:
receiving status indication information of uplink data corresponding to a target bearer;
sending status indication information of downlink data corresponding to the target bearer; and
uplink data received by the source network node.

Optionally, the network node 50 may further include:
a second sending module, configured to: after the receiving status indication information that is of the uplink data and that is sent by the source network node is received, send the receiving status indication information of the uplink data to the terminal.

Optionally, the network node 50 may further include:
a third sending module, configured to: in a case that duplicate data exists between the uplink data sent by the source network node and first uplink data, discard the duplicate data, and send the received uplink data to a core network node in a sequence of sequence numbers, where the first uplink data is uplink data sent by the terminal and received by the target network node.

The network node 50 in this embodiment of the present disclosure may implement processes implemented in the foregoing method embodiment shown in FIG. 2 and achieve a same beneficial effect. To avoid repetition, details are not described herein again.

FIG. 6 is a schematic diagram of a structure of a network node according to an embodiment of the present disclosure. The network node is a source network node. As shown in FIG. 6, a network node 60 includes:
a second receiving module 61, configured to receive a sequence number status transfer request message from a target network node; and
a fourth sending module 62, configured to send information related to received data to the target network node.

Optionally, the information related to the received data includes at least one of following:
receiving status indication information of uplink data corresponding to a target bearer;
sending status indication information of downlink data corresponding to the target bearer; and
uplink data received by the source network node.

Optionally, the uplink data received by the source network node may be:
uplink data starting from second uplink data and received by the source network node; where
the second uplink data is uplink data that is corresponding to the first discontinuous sequence number and that is received by the source network node.

Optionally, the network node 60 may further include:
a fifth sending module, configured to: before uplink data starting from second uplink data and received by the target network node, send uplink data corresponding to consecutive sequence numbers before the second uplink data to a core network node.

The network node 60 in this embodiment of the present disclosure may implement processes implemented in the foregoing method embodiment shown in FIG. 3 and achieve a same beneficial effect. To avoid repetition, details are not described herein again.

In addition, an embodiment of the present disclosure further provides a terminal, including a processor, a memory, and a computer program that is stored in the memory and executable on the processor. When the computer program is executed by the processor, each process of the foregoing data transmission method embodiments can be implemented, and a same technical effect can be achieved. To avoid repetition, details are not described herein. Optionally, the communication device may be a terminal or a network device.

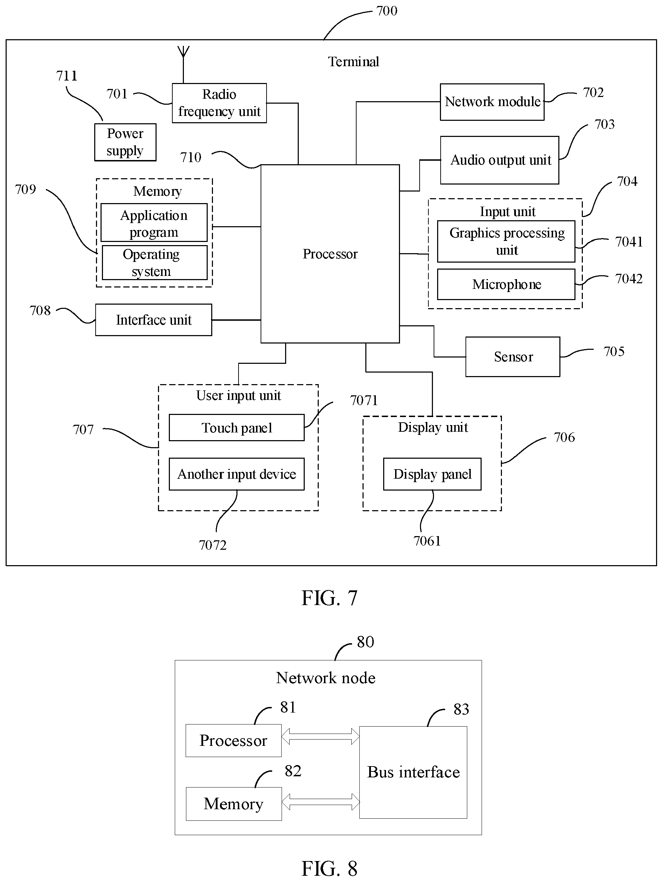

FIG. 7 is a schematic diagram of a hardware structure of a terminal for implementing the embodiments of the present disclosure. A terminal 700 includes but is not limited to components such as a radio frequency unit 701, a network module 702, an audio output unit 703, an input unit 704, a sensor 705, a display unit 706, a user input unit 707, an interface unit 708, a memory 709, a processor 710, and a power supply 711. Aperson skilled in the art may understand that a structure of the terminal shown in FIG. 7 does not constitute a limitation on the terminal, and the terminal may include more or fewer components than those shown in the figure, or combine some components, or have different component arrangements. In this embodiment of the present disclosure, the terminal includes but is not limited to a mobile phone, a tablet computer, a laptop computer, a palmtop computer, an in-vehicle terminal, a wearable device, a pedometer, and the like.

The processor 710 is configured to perform a first operation in a case that an uplink transmission path of the terminal 700 is changed in a dual-connection mobility management process. The performing a first operation includes either of continuing data transmission of a source connection and stopping the data transmission of the source connection.

The terminal 700 in this embodiment of the present disclosure may implement processes implemented in the foregoing method embodiment shown in FIG. 1 and achieve a same beneficial effect. To avoid repetition, details are not described herein again.

It should be understood that, in this embodiment of the present disclosure, the radio frequency unit 701 may be configured to receive and send information or receive and send a signal in a call process. Specifically, after downlink data from a base station is received, the processor 710 processes the downlink data. In addition, uplink data is sent to the base station. Generally, the radio frequency unit 701 includes but is not limited to an antenna, at least one amplifier, a transceiver, a coupler, a low noise amplifier, a duplexer, and the like. In addition, the radio frequency unit 701 may further communicate with a network and another device by using a wireless communication system.

The terminal provides wireless broadband Internet access for the user by using the network module 702, for example, helping the user send and receive an email, browsing a web page, and accessing streaming media.

The audio output unit 703 may convert audio data received by the radio frequency unit 701 or the network module 702 or stored in the memory 709 into an audio signal and output as sound. In addition, the audio output unit 703 may further provide audio output (for example, call signal receiving sound or message receiving sound) related to a specific function performed by the terminal 700. The audio output unit 703 includes a loudspeaker, a buzzer, a telephone receiver, and the like.

The input unit 704 is configured to receive an audio or video signal. The input unit 704 may include a graphics processing unit (GPU) 7041 and a microphone 7042. The graphics processing unit 7041 processes image data of a static picture or a video obtained by an image capture apparatus (such as a camera) in a video capture mode or an image capture mode. A processed image frame may be displayed on the display unit 706. The image frame processed by the graphics processing unit 7041 may be stored in the memory 709 (or another storage medium) or sent by using the radio frequency unit 701 or the network module 702. The microphone 7042 may receive sound and can process such sound into audio data. The processed audio data may be output by being converted into a format that may be sent to a mobile communications base station by using the radio frequency unit 701 in a telephone call mode.

The terminal 700 further includes at least one sensor 705, such as an optical sensor, a motion sensor, and another sensor. Specifically, the optical sensor includes an ambient light sensor and a proximity sensor. The ambient light sensor may adjust luminance of the display panel 7061 based on brightness of ambient light, and the proximity sensor may disable the display panel 7061 and/or backlight when the terminal 700 approaches an ear. As a type of the motion sensor, an accelerometer sensor may detect magnitude of an acceleration in each direction (generally three axes), and may detect magnitude and a direction of gravity when being static. The accelerometer sensor may be used for recognizing a terminal gesture (for example, horizontal and vertical screen switching, a related game, or magnetometer posture calibration), a function related to vibration recognition (for example, a pedometer or a strike), or the like. The sensor 705 may further include a fingerprint sensor, a pressure sensor, an iris sensor, a molecular sensor, a gyroscope, a barometer, a hygrometer, a thermometer, an infrared sensor, and the like. This is not described herein.

The display unit 706 is configured to display information entered by the user or information provided for the user. The display unit 706 may include a display panel 7061, and the display panel 7061 may be configured in a form of a liquid crystal display (LCD), an organic light-emitting diode (OLED), or the like.

The user input unit 707 may be configured to receive input digit or character information and generate key signal input related to user setting and function control of the terminal. Specifically, the user input unit 707 includes a touch panel 7071 and another input device 7072. The touch panel 7071, also referred to as a touchscreen, may collect a touch operation performed by the user on or near the touch panel 7071 (for example, an operation performed by the user on or near the touch panel 7071 by using any suitable object or accessory such as a finger or a stylus). The touch panel 7071 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into contact coordinates, sends the contact coordinates to the processor 710, and can receive and execute a command sent by the processor 710. In addition, the touch panel 7071 may be implemented by using multiple types such as a resistive type, a capacitive type, an infrared ray, and a surface acoustic wave. The user input unit 707 may include another input device 7072 in addition to the touch panel 7071. Specifically, the another input device 7072 may include but is not limited to one or more of a physical keyboard, a function key (such as a volume control key or an on/off key), a trackball, a mouse, a joystick, and the like. Details are not described herein.

Further, the touch panel 7071 may cover the display panel 7061. After detecting the touch operation on or near the touch panel 7071, the touch panel 7061 transmits the touch operation to the processor 710 to determine a type of a touch event, and then the processor 710 provides corresponding visual output on the display panel 7061 based on the type of the touch event. In FIG. 7, the touch panel 7071 and the display panel 7061 are used as two independent components to implement input and output functions of the terminal. However, in some embodiments, the touch panel 7071 and the display panel 7061 may be integrated to implement the input and output functions of the terminal. This is not specifically limited herein.

The interface unit 708 is an interface connecting an external apparatus to the terminal 700. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 708 may be configured to receive input (for example, data information and power) from the external apparatus and transmit the received input to one or more elements in the terminal 700, or may be configured to transmit data between the terminal 700 and the external apparatus.

The memory 709 may be configured to store a software program and various data. The memory 709 may mainly include a program storage area and a data storage area. The program storage area may store an operating system, an application program required by at least one function (such as a sound play function or an image play function), and the like. The data storage area may store data (such as audio data or an address book) or the like created based on use of the mobile phone. In addition, the memory 709 may include a high-speed random access memory, and may further include a non-volatile memory such as at least one magnetic disk storage component, a flash memory component, or another volatile solid-state storage component.

The processor 710 is a control center of the terminal, and is connected to all parts of the entire terminal by using various interfaces and lines, and performs various functions of the terminal and processes data by running or executing the software program and/or the module that are stored in the memory 709 and invoking the data stored in the memory 709, to implement overall monitoring on the terminal. The processor 710 may include one or more processing units. Optionally, the processor 710 may be integrated with an application processor and a modem processor. The application processor mainly processes an operating system, a user interface, an application program, and the like, and the modem processor mainly processes wireless communication. It may be understood that the modem processor may also not be integrated into the processor 710.

The terminal 700 may further include the power supply 711 (such as a battery) that supplies power to each component. Optionally, the power supply 711 may be logically connected to the processor 710 by using a power management system, to implement functions such as charging, discharging, and power consumption management by using the power management system.

In addition, the terminal 700 may further include some function modules not shown, and details are not described herein.

FIG. 8 is a schematic diagram of a structure of a network node according to an embodiment of the present disclosure. As shown in FIG. 8, the network node 80 includes a processor 81, a memory 82, and a computer program that is stored in the memory 82 and executable on the processor. The components in the network node 80 are coupled together by using a bus interface 83. When the computer program is executed by the processor 81, processes implemented in the method embodiment shown in FIG. 2 can be implemented, or processes implemented in the method embodiment shown in FIG. 3 can be implemented, and a same technical effect can be achieved. To avoid repetition, details are not described herein again.

An embodiment of the present disclosure further provides a computer-readable storage medium. A computer program is stored in the computer-readable storage medium. When being executed by a processor, processes of the foregoing embodiments of the data transmission method can be implemented, and a same technical effect can be achieved. To avoid repetition, details are not described herein. The computer-readable storage medium includes a read-only memory (ROM), a random access memory (RAM), a magnetic disk, an optical disc, or the like.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another same element in a process, method, article, or apparatus that includes the element.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of the present disclosure essentially or the part contributing to related technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of the present disclosure.

The embodiments of the present disclosure are described with reference to the accompanying drawings above. However, the present disclosure is not limited to the foregoing specific implementations. The foregoing specific implementations are merely exemplary, but are not limiting. A person of ordinary skill in the art may make many forms without departing from the objective and the scope of the claims of the present disclosure.

## Claims

1. A data transmission method, applied to a terminal, and comprising:
performing a first operation in a case that an uplink transmission path of the terminal is changed in a dual-connection mobility management process; wherein
the performing a first operation comprises either of continuing data transmission of a source connection and stopping the data transmission of the source connection.

2. The method according to claim 1, wherein the continuing the data transmission of the source connection comprises at least one of following:
stopping transferring a packet data convergence protocol PDCP data protocol data unit PDU to a first radio link control RLC entity by using a PDCP entity of the terminal;
transferring a PDCP control PDU to the first RLC entity by using the PDCP entity of the terminal;
starting to transfer the PDCP data PDU to a second RLC entity by using the PDCP entity of the terminal;
continuing to transmit uplink data by using the first RLC entity; and
continuing to transmit the uplink data by using a hybrid automatic repeat request HARQ entity corresponding to a source connection cell; wherein
the first RLC entity is an RLC entity corresponding to a source connection of the terminal, and the second RLC entity is an RLC entity corresponding to a target connection of the terminal.

3. The method according to claim 1, wherein the stopping the data transmission of the source connection comprises at least one of following:
stopping transferring a packet data convergence protocol PDCP data protocol data unit PDU to a first radio link control RLC entity by using a PDCP entity of the terminal;
stopping transferring a PDCP control PDU to the first RLC entity by using the PDCP entity of the terminal;
starting to transfer the PDCP data PDU to a second RLC entity by using the PDCP entity of the terminal;
emptying data in a transmission buffer of the first RLC entity;
emptying data in a retransmission buffer of the first RLC entity;
emptying data in a hybrid automatic repeat request HARQ buffer corresponding to the source connection; and
discarding an uplink grant of a source connection cell; wherein
the first RLC entity is an RLC entity corresponding to a source connection of the terminal, and the second RLC entity is an RLC entity corresponding to a target connection of the terminal.

4. The method according to any one of claims 1 to 3, wherein the method further comprises:
retransmitting data to a target network node by using a packet data convergence protocol PDCP entity of the terminal according to a preset rule; and/or
retransmitting data to the target network node by using the PDCP entity of the terminal based on a received status report delivered by the target network node.

5. The method according to claim 4, wherein the retransmitted data comprises either of following:
data from a beginning of first data to an end of second data; and
third data; wherein
the first data is first data that is not acknowledged to be successfully received, the second data is last data that is transmitted to the first RLC entity, the third data is data that is not acknowledged to be successfully received, and the first RLC entity is an RLC entity corresponding to the source connection of the terminal.

6. The method according to claim 4, wherein a retransmission occasion of data is either of following:
the uplink transmission path has been changed; and
the source connection has been released.

7. A data transmission method, applied to a target network node, and comprising:
sending a sequence number status transfer request message to a source network node; and
receiving information related to received data sent by the source network node.

8. The method according to claim 7, wherein a sending occasion of the sequence number status transfer request message is:
the target network node determines that a terminal releases a source connection; or
the target network node determines that the terminal has changed an uplink transmission path.

9. The method according to claim 7, wherein the information related to received data comprises at least one of following:
receiving status indication information of uplink data corresponding to a target bearer;
sending status indication information of downlink data corresponding to the target bearer; and
uplink data received by the source network node.

10. The method according to claim 9, wherein after the receiving status indication information of the uplink data sent by the source network node is received, the method further comprises:
sending the receiving status indication information of the uplink data to the terminal.

11. The method according to claim 9, wherein after the uplink data sent by the source network node is received, the method further comprises:
in a case that duplicate data exists between the uplink data sent by the source network node and first uplink data, discarding the duplicate data, and sending received uplink data to a core network node in a sequence of sequence numbers; wherein
the first uplink data is uplink data sent by the terminal and received by the target network node.

12. A data transmission method, applied to a source network node, and comprising:
receiving a sequence number status transfer request message from a target network node; and
sending information related to received data to the target network node.

13. The method according to claim 12, wherein the information related to received data comprises at least one of following:
receiving status indication information of uplink data corresponding to a target bearer;
sending status indication information of downlink data corresponding to the target bearer; and
uplink data received by the source network node.

14. The method according to claim 12, wherein the uplink data received by the source network node is:
uplink data starting from second uplink data and received by the source network node; wherein
the second uplink data is uplink data that is corresponding to a first discontinuous sequence number and that is received by the source network node.

15. The method according to claim 14, wherein before uplink data received by the source network node is sent to the target network node, the method further comprises:
sending uplink data corresponding to consecutive sequence numbers before the second uplink data to a core network node.

16. A terminal, comprising:
an execution module, configured to perform a first operation in a case that an uplink transmission path of the terminal is changed in a dual-connection mobility management process; wherein
the performing a first operation comprises either of continuing data transmission of a source connection and stopping the data transmission of the source connection.

17. The terminal according to claim 16, wherein the continuing the data transmission of the source connection comprises at least one of following:
stopping transferring a packet data convergence protocol PDCP data protocol data unit PDU to a first radio link control RLC entity by using a PDCP entity of the terminal;
transferring a PDCP control PDU to the first RLC entity by using the PDCP entity of the terminal;
starting to transfer the PDCP data PDU to a second RLC entity by using the PDCP entity of the terminal;
continuing to transmit uplink data by using the first RLC entity; and
continuing to transmit the uplink data by using a hybrid automatic repeat request HARQ entity corresponding to a source connection cell; wherein
the first RLC entity is an RLC entity corresponding to a source connection of the terminal, and the second RLC entity is an RLC entity corresponding to a target connection of the terminal.

18. The terminal according to claim 16, wherein the stopping the data transmission of the source connection comprises at least one of following:
stopping transferring a packet data convergence protocol PDCP data protocol data unit PDU to a first radio link control RLC entity by using a PDCP entity of the terminal;
stopping transferring a PDCP control PDU to the first RLC entity by using the PDCP entity of the terminal;
starting to transfer the PDCP data PDU to a second RLC entity by using the PDCP entity of the terminal;
emptying data in a transmission buffer of the first RLC entity;
emptying data in a retransmission buffer of the first RLC entity;
emptying data in a hybrid automatic repeat request HARQ buffer corresponding to the source connection; and
discarding an uplink grant of a source connection cell; wherein
the first RLC entity is an RLC entity corresponding to a source connection of the terminal, and the second RLC entity is an RLC entity corresponding to a target connection of the terminal.

19. The terminal according to any one of claims 16 to 18, further comprising:
a transmission module, configured to retransmit data to a target network node by using a packet data convergence protocol PDCP entity of the terminal according to a preset rule; and/or
retransmit data to the target network node by using the PDCP entity of the terminal based on a received status report delivered by the target network node.

20. The terminal according to claim 19, wherein the retransmitted data comprises either of following:
data from a beginning of first data to an end of second data; and
third data; wherein
the first data is first data that is not acknowledged to be successfully received, the second data is last data that is transmitted to the first RLC entity, the third data is data that is not acknowledged to be successfully received, and the first RLC entity is an RLC entity corresponding to the source connection of the terminal.

21. The terminal according to claim 19, wherein a retransmission occasion of data is either of following:
the uplink transmission path has been changed; and
the source connection has been released.

22. A network node, wherein the network node is a target network node, and comprises:
a first sending module, configured to send a sequence number status transfer request message to a source network node; and
a first receiving module, configured to receive information related to received data sent by the source network node.

23. A network node, wherein the network node is a source network node, and comprises:
a second receiving module, configured to receive a sequence number status transfer request message from a target network node; and
a fourth sending module, configured to send information related to received data to the target network node.

24. A communication device, comprising: a memory, a processor, and a computer program that is stored in the memory and executable on the processor, wherein when the computer program is executed by the processor, steps of the data transmission method according to any one of claims 1 to 6 are implemented, or steps of the data transmission method according to any one of claims 7 to 11 are implemented, or steps of the data transmission method according to any one of claims 12 to 15 are implemented.

25. A computer-readable storage medium storing a computer program, wherein when the computer program is executed by a processor, steps of the data transmission method according to any one of claims 1 to 6 are implemented, or steps of the data transmission method according to any one of claims 7 to 11 are implemented, or steps of the data transmission method according to any one of claims 12 to 15 are implemented.
